(19) **Europäisches Patentamt European Patent Office Office européen des brevets**

(11) **EP 4 525 169 A1**

(12) **EUROPEAN PATENT APPLICATION**
published in accordance with Art. 153(4) EPC

(43) Date of publication:
**19.03.2025 Bulletin 2025/12**

(51) International Patent Classification (IPC):
**H01M 50/342** (2021.01)  **H01M 50/258** (2021.01)
**H01M 50/249** (2021.01)

(21) Application number: **23802994.6**

(22) Date of filing: **11.05.2023**

(52) Cooperative Patent Classification (CPC):
**H01M 50/3425; H01M 50/249; H01M 50/258;
H01M 50/342;** H01M 2220/20; Y02E 60/10

(86) International application number:
**PCT/CN2023/093485**

(87) International publication number:
**WO 2023/217225 (16.11.2023 Gazette 2023/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.05.2022  CN 202221128931 U**

(71) Applicant: **BYD Company Limited**
**Shenzhen, Guangdong 518118 (CN)**

(72) Inventors:
 • **WANG, Xinyue**
  **Shenzhen, Guangdong 518118 (CN)**

 • **CHEN, Guangan**
  **Shenzhen, Guangdong 518118 (CN)**
 • **GAO, Xin**
  **Shenzhen, Guangdong 518118 (CN)**
 • **WANG, Cuicui**
  **Shenzhen, Guangdong 518118 (CN)**
 • **SUN, Zenan**
  **Shenzhen, Guangdong 518118 (CN)**

(74) Representative: **Mathys & Squire**
**The Shard**
**32 London Bridge Street**
**London SE1 9SG (GB)**

(54) **EXPLOSION-PROOF VALVE, BATTERY, BATTERY MODULE, BATTERY PACK AND VEHICLE**

(57)  A vehicle, comprising a battery pack. The battery pack comprises a battery or a battery module. The battery comprises an explosion-proof valve. The explosion-proof valve comprises an explosion-proof valve body. The explosion-proof valve body has an opening region, and the opening region is provided with an explosion-proof notched groove at the edge thereof. The explosion-proof notched groove comprises a first straight line section, two arc sections and at least one second straight line section. Two ends of the first straight line section are connected to the two arc sections, respectively; at least one of the ends of the second straight line section is connected to the arc section; and the first straight line section is arranged parallel to the second straight line section. In a depth direction of the explosion-proof notched groove, an orthographic projection of the opening region is in an oblong shape. An outer edge of the orthographic projection of the opening region is a predetermined opening boundary, and the area of the orthographic projection of the opening region is S, where $S = a \times b + \pi \times b^2/4$, $S \geq 80mm^2$, and $b \geq 6mm$.

FIG. 1

EP 4 525 169 A1

**Description**

## CROSS-REFERENCE TO RELATED APPLICATIONS

This application claims priority to and benefits of Chinese Patent Application No. 202221128931.6, filed on May 12, 2022. The entire content of the above-referenced application is incorporated herein by reference.

## FIELD

The present disclosure relates to the technical field of batteries, and specifically to an explosion-proof valve, a battery, a battery module, a battery pack, and a vehicle.

## BACKGROUND

In the related art, an explosion-proof valve of a battery is usually welded to a cover plate of the battery. When the gas pressure in the battery exceeds the opening pressure of the explosion-proof valve, the explosion-proof valve can be opened to release the gas generated inside the battery, thereby preventing safety accidents such as explosion of the battery. However, when the pressure in the battery changes and becomes too high, unstable welding of the explosion-proof valve to the battery is likely to cause the entire explosion-proof valve to be blown open during pressure relief, affecting the safety of the battery and the entire battery system.

## SUMMARY

The present disclosure aims to resolve at least one of the technical problems in the related art. Therefore, a first objective of the present disclosure is to provide an explosion-proof valve, to improve the stability of the explosion-proof valve after being mounted on a battery, increase the speed of pressure relief, and improve the usage safety of the explosion-proof valve.
A second objective of the present disclosure is to provide a battery using the explosion-proof valve.
A third objective of the present disclosure is to provide a battery module using the battery.
A fourth objective of the present disclosure is to provide a battery pack using the battery module or the battery.
A fifth objective of the present disclosure is to provide a vehicle using the battery or the battery pack.
An embodiment of a first aspect of the present disclosure provides an explosion-proof valve, including: an explosion-proof valve body, the explosion-proof valve body having an opening region, an explosion-proof scored groove being provided at an edge of the opening region, the explosion-proof scored groove including a first straight line segment, two arc segments, and at least one second straight line segment, two ends of the first straight line segment being respectively connected to the two arc segments, at least one end of the second straight line segment being connected to the arc segment, and the first straight line segment being arranged in parallel with the second straight line segment; in a depth direction of the explosion-proof scored groove, a shape of an orthographic projection of the opening region being oblong, an outer edge of the orthographic projection of the opening region being a predetermined opening boundary, and an area of the orthographic projection of the opening region being defined as S, S, a, and b respectively meeting: $S = a \times b + \pi \times b^2/4$, $S \geq 80 \ mm^2$, a representing a length of the first straight line segment, b representing a distance between an outer side of the first straight line segment and an outer side of the second straight line segment, and $b \geq 6 \ mm$.
According to the explosion-proof valve of the embodiment of the present disclosure, the shape of the opening region of the explosion-proof valve and the ranges of the lengths of the first straight line segment and the arc segments are defined to make the area of the opening region more reasonable. When the internal pressure of the battery increases and needs to be relieved, the opening region can be opened in a timely manner and the area S of the opening region can be ensured, to increase the amount of gas discharged through the explosion-proof valve per unit time, so that the internal pressure of the battery can be quickly relieved. In addition, by defining the area of the opening region, the structural strength of the opening region of the explosion-proof valve can be increased, so that the explosion-proof valve can be mounted more stably, thereby reducing the possibility of safety accidents such as battery burning and explosion caused by untimely pressure relief.
In some examples, b further meets: $b < 30 \ mm$.
In some examples, a and b further meet: $a > b$.
In some examples, a meets: $8 \ mm \leq a \leq 30 \ mm$.
In some examples, a number of second straight line segments is two, and each of the second straight line segments is connected to a corresponding arc segment; and in the depth direction of the explosion-proof scored groove, two free ends of an outer edge of an orthographic projection of the explosion-proof scored groove are connected to form a connecting line, and the connecting line and the outer edge of the orthographic projection of the explosion-proof scored groove jointly constitute the predetermined opening boundary.

In some examples, a length of the connecting line is defined as $c_1$, and a score length of the explosion-proof scored groove is defined as $L_1$, where $L_1$ and $c_1$ respectively meet:

$$L_1=2a-c_1+\pi b, \text{ and } c_1\geq 1 \text{ mm}.$$

In some examples, $c_1$ further meets: $c_1\leq 10$ mm.

In some examples, a number of second straight line segments is one, two ends of the second straight line segment are respectively connected to the two arc segments, and the first straight line segment, the second straight line segment, and the two arc segments constitute a closed annular structure; and an outer edge of an orthographic projection of the explosion-proof scored groove in the depth direction of the explosion-proof scored groove constitutes the predetermined opening boundary.

In some examples, the explosion-proof valve further includes: a structural scored groove, the structural scored groove being provided in the opening region, and the structural scored groove is connected to the explosion-proof scored groove.

In some examples, in the depth direction of the explosion-proof scored groove, a depth of the structural scored groove is less than a depth of the explosion-proof scored groove.

In some examples, the structural scored groove includes an X-shaped scored groove or a Y-shaped scored groove.

In some examples, when the structural scored groove includes the Y-shaped scored groove, the Y-shaped scored groove includes a first scored groove and two second scored grooves, one end of the first scored groove is connected to one end of each of the two second scored grooves, other ends of the two second scored grooves in a direction away from the first scored groove extend away from each other, and at least one of an other end of the first scored groove and the other ends of the two second scored grooves is connected to the explosion-proof scored groove; and a length of the first scored groove is defined as d, a length of each of the second scored grooves is defined as $c_2$, and a score length of the Y-shaped scored groove is defined as $L_2$, where $L_2$, $c_2$, and d meet: $L_2=d+2c_2$, 5 mm$\leq c_2\leq$30 mm, and 5 mm$\leq d\leq$30 mm.

In some examples, an angle between the two second scored grooves is defined as $\alpha$, where $\alpha$ meets: 30°$\leq\alpha\leq$150°.

In some examples, the explosion-proof valve body includes a connection section, a buffer section, and a support section, the connection section is connected to an outer peripheral side of the support section, the support section is spaced apart from the connection section in a thickness direction of the support section, the buffer section is connected between the connection section and the support section, and the opening region is provided on the support section.

In some examples, a recess is formed on the explosion-proof valve body, the explosion-proof scored groove is formed on a bottom wall of the recess, and a side wall of the explosion-proof scored groove away from a center of the explosion-proof valve body is flush with a side wall of the recess away from the center of the explosion-proof valve body.

An embodiment of a second aspect of the present disclosure provides a battery, including the explosion-proof valve according to the embodiment of the first aspect.

In some examples, an energy density of the battery is defined as E, where E meets: 200 wh/kg$\leq E\leq$280 wh/kg.

An embodiment of a third aspect of the present disclosure provides a battery module, including the battery according to the embodiment of the second aspect.

An embodiment of a fourth aspect of the present disclosure provides a battery pack, including the battery according to the embodiment of the second aspect or the battery module according to the embodiment of the third aspect.

An embodiment of a fifth aspect of the present disclosure provides a vehicle, including the battery according to the embodiment of the second aspect or the battery pack according to the embodiment of the fourth aspect.

Additional aspects and advantages of the present disclosure will be partly given in and partly apparent from the description below, or understood through practice of the present disclosure.

## BRIEF DESCRIPTION OF THE DRAWINGS

The above and/or other additional aspects and advantages of the present disclosure become apparent and comprehensible from the description of embodiments in connection with accompanying drawings, in which:

FIG. 1 is a schematic diagram of an explosion-proof valve according to an embodiment of the present disclosure;

FIG. 2 is a schematic diagram of an explosion-proof valve according to another embodiment of the present disclosure;

FIG. 3 is a schematic diagram of an explosion-proof valve according to still another embodiment of the present disclosure;

FIG. 4 is a schematic cross-sectional view of an explosion-proof valve according to an embodiment of the present disclosure;

FIG. 5 is a schematic diagram showing comparison between pressure relief rates of batteries of Comparative Example 1, Example 1, and Example 2 according to the present disclosure;

FIG. 6 is a schematic diagram showing comparison between pressure relief rates of batteries of Comparative Example 2, Example 3, and Example 4 according to the present disclosure;

FIG. 7 is a schematic diagram showing comparison between pressure relief rates of batteries of Comparative Example 3, Example 5, and Example 6 according to the present disclosure;

FIG. 8 is a schematic diagram of a vehicle according to an embodiment of the present disclosure;

FIG. 9 is a schematic diagram of a vehicle according to another embodiment of the present disclosure; and

FIG. 10 is a schematic diagram of a vehicle according to still another embodiment of the present disclosure.

In the drawings:

explosion-proof valve body 100; explosion-proof valve 200; battery 300; battery module 400; battery pack 500; vehicle 600;

opening region 10; predetermined opening boundary 101; explosion-proof scored groove 11; first straight line segment 111; second straight line segment 112; arc segment 113; connecting line 114; structural scored groove 12; X-shaped scored groove 121; arc-shaped scored groove 1211; Y-shaped scored groove 122; first scored groove 1221; second scored groove 1222;

connection section 20; buffer section 30; support section 40; recess 41.

## DETAILED DESCRIPTION

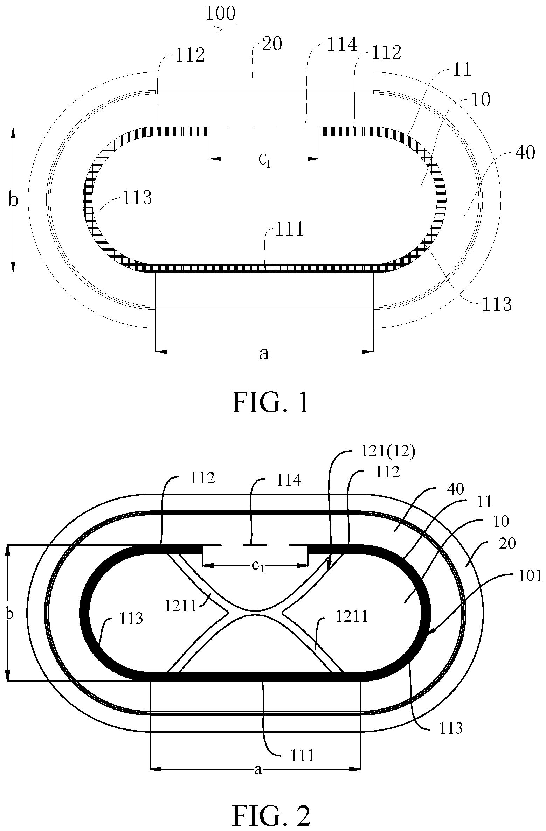

Embodiments of the present disclosure will be described in detail below. The embodiments described with reference to the accompanying drawings are merely examples. An explosion-proof valve 200 according to the embodiments of the present disclosure will be described below with reference to FIG. 1 to FIG. 4. The following description of the present disclosure is given with reference to an example where the explosion-proof valve 200 is mounted on a battery 300 and used to relieve the pressure of the battery 300 when the internal pressure of the battery 300 increases.

As shown in FIG. 1 to FIG. 4, an embodiment of a first aspect of the present disclosure provides an explosion-proof valve 200, including an explosion-proof valve body 100.

Specifically, referring to FIG. 1 to FIG. 3, the explosion-proof valve body 100 has an opening region 10. When the explosion-proof valve 200 is applied to the battery 300 and the pressure inside the battery 300 increases, the gas inside the battery 300 can be smoothly released through the opening region 10 of the explosion-proof valve 200. An explosion-proof scored groove 11 is provided at an edge of the opening region 10. An outer edge of an orthographic projection of the opening region 10 is a predetermined opening boundary 101. In a depth direction of the explosion-proof scored groove 11, a shape of an orthographic projection of the opening region 10 is oblong. As such, the oblong shape can relatively increase the area of the opening region 10. For example, the explosion-proof valve 200 may be arranged on one side surface of the housing of the prismatic battery 300. The opening region 10 in an oblong shape can better adapt to the shape of the housing of the battery 300, so that the area S of the orthographic projection of the opening region 10 can be increased, and therefore the amount of gas discharged can be increased. The depth direction of the explosion-proof scored groove 11 may be understood as a direction from a groove opening to a groove bottom of the explosion-proof scored groove 11.

Referring to FIG. 1 to FIG. 3, a thickness of the explosion-proof scored groove 11 corresponding to the opening region 10 is less than thicknesses of other portions of the opening region 10. That is, a thickness of a bottom wall of the explosion-proof scored groove 11 is less than the thicknesses of the other portions of the opening region 10. Therefore, with the arrangement of the explosion-proof scored groove 11 at the edge of the opening region 10, when the internal pressure of the battery 300 increases and needs to be relieved through the explosion-proof valve 200, the explosion-proof valve 200 can preferentially break at the explosion-proof scored groove 11, to effectively avoid the situation that the opening region 10 cannot be opened normally or the entire explosion-proof valve 200 is blown open, thereby achieving smooth pressure relief, and improving the safety of the battery 300 and the entire battery system.

The explosion-proof scored groove 11 includes a first straight line segment 111, two arc segments 113, and at least one second straight line segment 112. Two ends of the first straight line segment 111 are respectively connected to the two arc segments 113. At least one end of the second straight line segment 112 is connected to the arc segment 113. The first straight line segment 111 is arranged in parallel with the second straight line segment 112. That is, if the number of the second straight line segments 112 is two, the two second straight line segments 112 are respectively connected to the two arc segments 113. If the number of the second straight line segments 112 is one, two ends of the second straight line segment 112 are respectively connected to the two arc segments 113. A length of the first straight line segment 111 is defined as a, and a distance between an outer side of the first straight line segment 111 and an outer side of the second straight line segment 112 is defined as b. In the depth direction of the explosion-proof scored groove 11, the area of the orthographic projection of the opening region 10 is defined as S. S, a and, b respectively meet: $S = a \times b + \pi \times b^2/4$, $S \geq 80$ mm$^2$, and $b \geq 6$ mm.

It can be understood that the outer side of the first straight line segment 111 is the side of the first straight line segment 111 away from the center of the explosion-proof valve 200, and the outer side of the second straight line segment 112 is the side of the second straight line segment 112 away from the center of the explosion-proof valve 200. A cross-sectional area of the explosion-proof scored groove 11 may be rectangular or inverted trapezoidal. "Cross-section" herein refers to: a plane parallel to the depth direction of the explosion-proof scored groove 11. When the cross-section of the explosion-proof scored groove 11 is inverted trapezoidal, the width of the explosion-proof scored groove 11 gradually decreases in a direction from the groove opening to the groove bottom of the explosion-proof scored groove 11. In this case, a may be understood as a length of an outer edge of the first straight line segment 111 at the groove top or opening, and b may be understood as a diameter of an outer edge of the arc segment 113 at the groove top or opening. In other words, in the depth direction of the explosion-proof scored groove 11 (i.e., in the direction from the groove opening to the groove bottom of the explosion-proof scored groove 11), the outer edge of the orthographic projection of the explosion-proof scored groove 11 includes two opposing semicircles, b may be understood as a diameter of the semicircles, and a may be understood as a distance between centers of the two semicircles. The area S of the orthographic projection of the opening region 10 may include an area of two semicircles having a diameter b and an area of a rectangle having a length a and a width b, and the two semicircles are respectively connected to two ends in a length direction of the rectangle.

Specifically, when $S \geq 80$ mm$^2$ and $b \geq 6$ mm, the control of the area of the opening region 10 ensures that the area of the opening region 10 meets a requirement of the battery 300 on the pressure relief capability of the explosion-proof valve 200, thereby achieving smooth pressure relief. When $S < 80$ mm$^2$, the area of the opening region 10 is small, the amount of gas discharged through the explosion-proof valve 200 per unit time is insufficient, and the explosion-proof valve 200 may fail to relieve the pressure in a timely manner, resulting in a possibility that the increased pressure inside the battery 300 blows open the explosion-proof valve 200 and a possibility that other battery systems are affected, reducing the usage safety of the battery 300. Therefore, S and b within the above value ranges not only can meet the area of the opening region 10, but also can ensure the structural stability of the explosion-proof valve 200.

According to the explosion-proof valve 200 of the embodiment of the present disclosure, the shape of the opening region 10 of the explosion-proof valve 200 and the range of the area S of the orthographic projection of the opening region 10 are defined to make the area of the opening region 10 more reasonable. When the explosion-proof valve 200 is applied to the battery 300 and the internal pressure of the battery 300 increases and needs to be relieved, the opening region 10 can be opened in a timely manner and the area S of the opening region 10 can be effectively ensured, to increase the amount of gas discharged through the explosion-proof valve 200 per unit time, so that the internal pressure of the battery 300 can be quickly relieved. In addition, by defining the value ranges of S and b, not only the area S of the opening region 10 can meet smooth pressure relief, but also the structural strength of the explosion-proof valve 200 can be improved, thereby improving the reliability and service life of the explosion-proof valve 200 mounted on the battery 300.

In some embodiments, the distance b between the outer side of the first straight line segment 111 and the outer side of the second straight line segment 112 is less than 30 mm. Therefore, when the total area of the explosion-proof valve 200 is constant, this can effectively prevent the opening region 10 from occupying an excessively large area of the explosion-proof valve 200, resulting in a decrease in the structural stability of the explosion-proof valve 200 and that the opening region 10 is likely to be unintentionally opened, affecting the service life of the explosion-proof valve 200.

In some embodiments, a length of the first straight line segment 111 is defined as a, and a distance between an outer side of the first straight line segment 111 and an outer side of the second straight line segment 112 is defined as b. $a > b$, and a and b are both measured in mm. Such a configuration facilitates the manufacturing of the explosion-proof scored groove 11.

In some embodiments, the length a of the first straight line segment 111 meets: $8$ mm $\leq a \leq 30$ mm. Such a configuration can ensure that the explosion-proof valve 200 has a sufficient area of opening region, and the area of opening is not too large. When the total area of the explosion-proof valve 200 is constant, this can effectively prevent the opening region 10 from occupying an excessively large area of the explosion-proof valve 200, resulting in a decrease in the structural stability of the explosion-proof valve 200 and that the opening region 10 is likely to be unintentionally opened, affecting the service life of the explosion-proof valve 200.

In some embodiments, as shown in FIG. 1, a length of the first straight line segment 111 is defined as a, a distance between an outer side of the first straight line segment 111 and an outer side of the second straight line segment 112 is defined as b, and a and b meet: $a > b$, $8$ mm $\leq a \leq 30$ mm, and $b < 30$ mm. In other words, the length of the opening region 10 (in the direction from left to right in FIG. 1) is greater than the width of the opening region 10 (in the vertical direction in FIG. 1), to ensure that the opening region 10 is in an oblong shape, so that the opening region 10 can cooperate with the explosion-proof valve body 100 to increase the area S of the orthographic projection of the opening region 10. In addition, by defining the ranges of a and b, a reasonable area of the opening region 10 can be formed, to increase the structural strength of the opening region 10 and facilitate the timely relief of the increased pressure inside the battery 300 through the opening region 10, thereby improving the usage safety of the battery 300.

In some embodiments, as shown in FIG. 1 and FIG. 2, the explosion-proof scored groove 11 includes a first straight line segment 111, two arc segments 113 arranged oppositely, and two second straight line segments 112 spaced apart from each other. The first straight line segment 111 is arranged in parallel with the second straight line segment 112. Two ends of the first straight line segment 111 are respectively connected to the two arc segments 113, and each of the second straight line segments 112 is connected to a corresponding arc segment 113. In the depth direction of the explosion-proof scored groove 11, two free ends of an outer edge of an orthographic projection of the explosion-proof scored groove 11 are connected to form a connecting line 114. That is, a line connecting edges of sides of the two second straight line segments 112 away from the center of the explosion-proof valve 200 is the connecting line 114. The connecting line 114 and the outer edge of the orthographic projection of the explosion-proof scored groove 11 jointly constitute the predetermined opening boundary 101. In this case, an area of a region defined within the predetermined opening boundary 101 (i.e., the area of the orthographic projection of the opening region 24 in the depth direction of the explosion-proof scored groove 11) is defined as $S_1$, $S_1 = a \times b + \pi \times b^2/4$, a total length of the explosion-proof scored groove 11 is defined as $L_1$, and $L_1 = 2a - c_1 + \pi b$. a represents a length of the first straight line segment 111, b represents a distance between an outer side of the first straight line segment 111 and an outer side of the second straight line segment 112, and $c_1$ represents a distance between the two second straight line segments 112, i.e., a length of the connecting line 114.

Optionally, $1\ mm \leq c_1 \leq 10\ mm$. However, the present disclosure is not limited thereto. Therefore, by defining the distance $c_1$ between the two second straight line segments 112, the structural strength of the opening region 10 can be relatively increased, to increase the opening stability of the opening region 10, so that the opening region 10 is not likely to fall off from the explosion-proof valve 200 during pressure relief to cause secondary injuries. In addition, by making the explosion-proof scored groove 11 have a certain score length $L_1$, the opening region 10 can be smoothly opened, thereby further improving the safety of the battery 300.

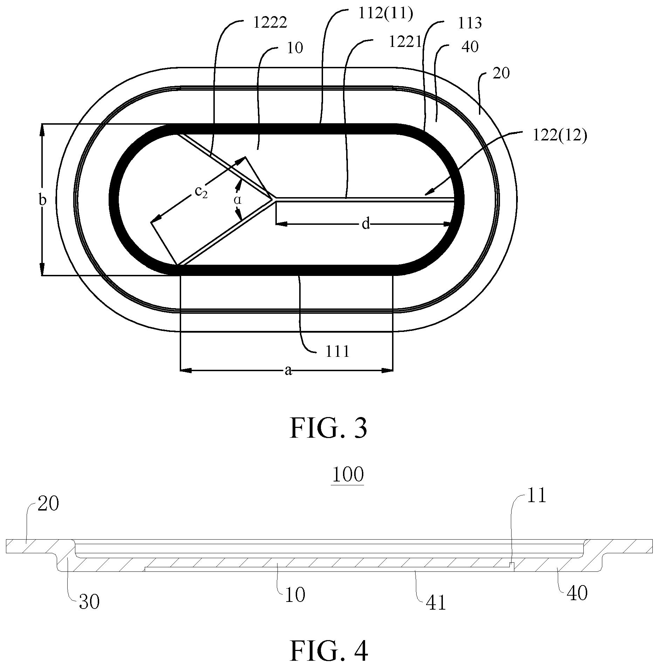

In some other specific embodiments, as shown in FIG. 3, the explosion-proof scored groove 11 includes a first straight line segment 111, a second straight line segment 112, and two arc segments 113 arranged oppositely. The number of the second straight line segments 112 is one, the first straight line segment 111 is arranged in parallel with the second straight line segment 112, and two ends of each of the first straight line segment 111 and the second straight line segment 112 are respectively connected to the two arc segments 113. The first straight line segment 111, the second straight line segment 112, and the two arc segments 113 form a closed annular structure. An outer edge of an orthographic projection of the explosion-proof scored groove 11 in the depth direction of the explosion-proof scored groove 11 constitutes the predetermined opening boundary 101. In this case, the explosion-proof scored groove 11 extends in a circumferential direction of the opening region 10 to form a closed annular shape. In this case, an area of the predetermined opening boundary 101 is defined as $S_2$, and $S_2 = a \times b + \pi \times b^2/4$. a represents a length of the first straight line segment, and b represents a distance between an outer side of the first straight line segment 111 and an outer side of the second straight line segment 112. Therefore, it is ensured that the explosion-proof valve 200 can be opened at the explosion-proof scored groove during pressure relief, so that the pressure can be relieved through the explosion-proof valve 200 in a timely manner, thereby improving the timeliness of the explosion-proof valve 200.

It should be noted that a cross-sectional area of the explosion-proof scored groove 11 may be rectangular or inverted trapezoidal. "Cross-section" herein refers to: a plane parallel to the depth direction of the explosion-proof scored groove 11. When the cross-section of the explosion-proof scored groove 11 is inverted trapezoidal, the width of the explosion-proof scored groove 11 gradually decreases toward the groove bottom of the explosion-proof scored groove 11. In this case, a may be understood as a length of an outer edge of the first straight line segment 111 at the groove top or opening, and b may be understood as a diameter of an outer edge of the arc segment 113 at the groove top or opening. In other words, in the depth direction of the explosion-proof scored groove 11 (i.e., in the direction from the groove opening to the groove bottom of the explosion-proof scored groove 11), the outer edge of the orthographic projection of the explosion-proof scored groove 11 includes two opposing semicircles, b may be understood as a diameter of the semicircles, and a may be understood as a distance between centers of the two semicircles.

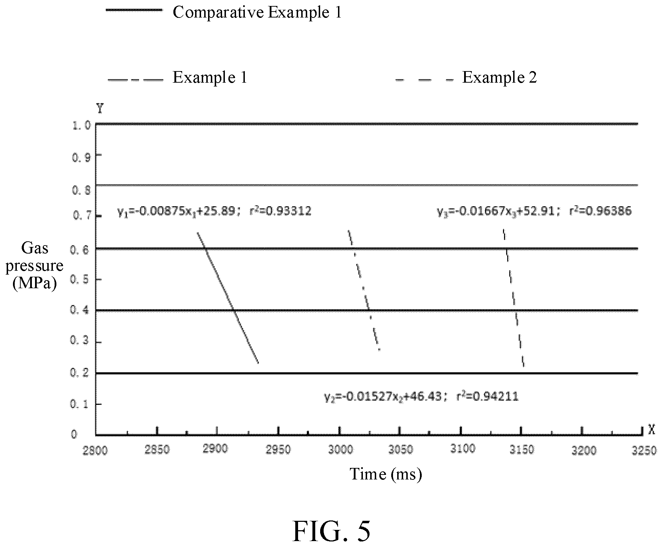

Comparative Examples 1 to 3 (i.e., related art) and Examples 1 to 6 (i.e., embodiments of the present disclosure) will be described below. Batteries in Comparative Examples 1 to 3 and batteries 300 in Examples 1 to 6 were tested respectively using a method specified in GB/T 31485-2015, and the pressure relief rate curves of the corresponding batteries were recorded. The opening region S, the length a of the first straight line segment, and the distance b between the outer side of the first straight line segment and the outer side of the second straight line segment in Comparative Examples 1 to 3 were selected from Table 2 below. The opening region S, the length a of the first straight line segment, and the distance b between the outer side of the first straight line segment and the outer side of the second straight line segment in Examples 1 to 6 were selected from Table 1 below. The final test results are shown in Fig. 5 to Fig. 7. Table 1 shows the values of a and b and the corresponding S values in six different examples of the present disclosure (i.e., Examples 1 to 6), where the value ranges of a and b basically increase gradually, and S also shows an increasing trend as a whole. Table 2 shows the values of a and b and the corresponding S values in three comparative examples (i.e., Comparative Examples 1 to 3). The values of a and b in Comparative Examples 1 to 3 are respectively less than the values of a and b in Examples 1 to 6, and correspondingly, the values of S in Comparative Examples 1 to 3 are less than the values of S in Examples 1 to 6.

Table 1

| No. | a (mm) | b (mm) | S (mm$^2$) |
|---|---|---|---|
| Example 1 | 8.8 | 6 | 81.06 |
| Example 2 | 16 | 10 | 238.5 |
| Example 3 | 20 | 15 | 476.625 |
| Example 4 | 24 | 20 | 794 |
| Example 5 | 30 | 22 | 1039.94 |
| Example 6 | 30 | 29.8 | 1591.1114 |

Table 2

| No. | a (mm) | b (mm) | S (mm$^2$) |
|---|---|---|---|
| Comparative Example 1 | 6 | 6 | 64.26 |
| Comparative Example 2 | 4 | 5 | 39.625 |
| Comparative Example 3 | 8 | 5 | 59.625 |

FIG. 5 is a graph showing the variation of gas pressure inside the battery 300 during pressure relief when the pressure inside the battery 300 is increased in Example 1, Example 2, and Comparative Example 1. As can be seen from the graph, the decreases in the gas pressure per unit time in Examples 1 and 2 are greater than the decrease in the gas pressure in Comparative Example 1.

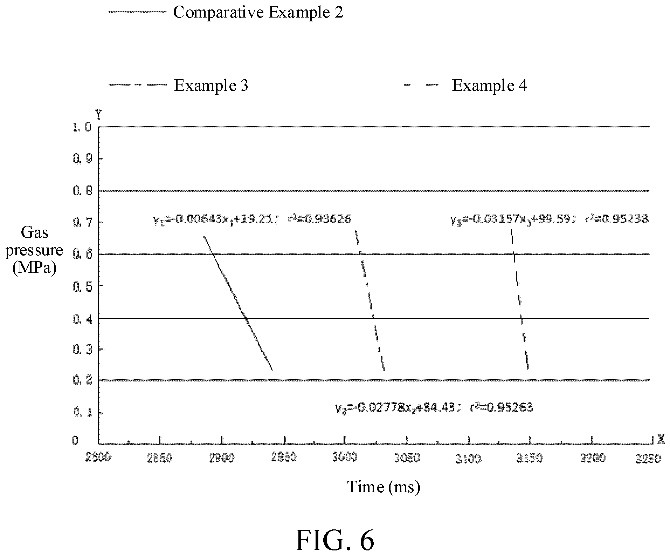

FIG. 6 is a graph showing the variation of gas pressure inside the battery 300 during pressure relief when the pressure inside the battery 300 is increased in Example 3, Example 4, and Comparative Example 2. As can be seen from the graph, the decreases in the gas pressure per unit time in Examples 3 and 4 are greater than the decrease in the gas pressure in Comparative Example 2.

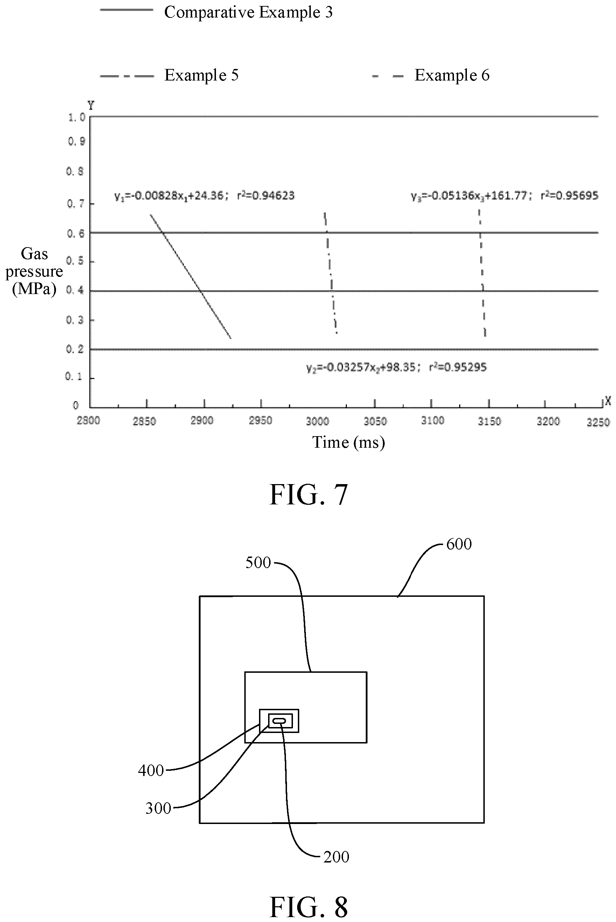

FIG. 7 is a graph showing the variation of gas pressure inside the battery 300 during pressure relief when the pressure inside the battery 300 is increased in Example 5, Example 6, and Comparative Example 3. As can be seen from the graph, the decreases in the gas pressure per unit time in Examples 5 and 6 are greater than the decrease in the gas pressure in Comparative Example 3.

Therefore, based on Examples 1 to 6, with the value ranges of a and b that the embodiments of the present disclosure seek to protect, the area of opening of the opening region 10 can be effectively increased, to increase the amount of gas discharged through the explosion-proof valve 200 per unit time, thereby improving the safety of the battery 300 using the explosion-proof valve 200.

Further, referring to FIG. 2 to FIG. 3, the explosion-proof valve 200 further includes a structural scored groove 12. The structural scored groove 12 is provided in the opening region 10, and the structural scored groove 12 is connected to the explosion-proof scored groove 11. The structural scored groove 12 and the explosion-proof scored groove 11 may both be located on the same side of the opening region 10. By such a configuration, the structural scored groove 12 can increase the structural strength of the opening region 10, so that when the opening region 10 is subjected to the internal pressure of the battery 300, the structural scored groove 12 can deform itself to increase the pressure bearing capability of the interior of the explosion-proof valve 200. For example, when the internal pressure of the battery 300 increases, the internal pressure of the battery 300 will squeeze the opening region 10 outward, to deform the opening region 10. The structural scored groove 12 can increase the deformation of the opening region 10 to a certain extent to relatively improve the structural strength of the opening region 10, thereby effectively preventing unintentional opening of the explosion-proof valve 200. Therefore, the arrangement of the structural scored groove 12 in the opening region 10 can improve the structural strength of the opening region 10, avoid unintentional opening of the explosion-proof valve 200, and effectively prevent the deformation of the explosion-proof valve 200 during long-term use, thereby improving the stability and service life of the explosion-proof valve 200.

In some embodiments, in the depth direction of the explosion-proof scored groove 11, a depth of the structural scored groove 12 may be less than a depth of the explosion-proof scored groove 11. In a thickness direction of the explosion-proof valve 200, a thickness of the opening region 10 at a position corresponding to the structural scored groove 12 is greater than the thickness of the opening region 10 at the position corresponding to the explosion-proof scored groove 11. Such a configuration can effectively increase the stability of the opening region 10, and while protecting the explosion-proof valve 200, the relatively deep explosion-proof scored groove 11 is conducive to the smooth opening of the explosion-proof valve 200.

Optionally, as shown in FIG. 2 and FIG. 3, the structural scored groove 12 includes an X-shaped scored groove 121 or a Y-shaped scored groove 122, etc. When the shape of the structural scored groove 12 is the X-shaped scored groove 121, the structural scored groove 12 in the shape of "X" is formed in the opening region 10. When the shape of the structural scored groove 12 is the Y-shaped scored groove 122, the structural scored groove 12 in the shape of "Y" is formed in the opening region 10.

Referring to FIG. 2, when the structural scored groove 12 includes the X-shaped scored groove 121, the X-shaped scored groove includes two arc-shaped scored grooves 1211. The two arc-shaped scored grooves 1211 are connected to each other, with openings thereof facing away from each other. In the explosion-proof valve 200 with the the X-shaped scored groove 121, a distance between an outer side of the first straight line segment 111 and an outer side of the second straight line segment 112 is defined as b, a length of the first straight line segment 111 is defined as a, and a length of the explosion-proof scored groove 11 of the explosion-proof valve 200 with the X-shaped scored groove 121 is defined as $L_2$. $L_2$ and $c_1$ respectively meet: $L_2=2a-c_1+\pi b$, and 1 mm$\leq c_1 \leq$10 mm. However, the present disclosure is not limited thereto.

Referring to FIG. 3, when the structural scored groove 12 includes the Y-shaped scored groove 122, the Y-shaped scored groove 122 includes a first scored groove 1221 and two second scored grooves 1222. One end of the first scored groove 1221 is connected to one end of each of the two second scored grooves 1222. In a direction away from the first scored groove 1221, other ends of the two second scored grooves 1222 extend away from each other, and an angle is formed between the two second scored grooves 1222. For example, the two second scored grooves 1222 may be symmetrically distributed with respect to the first scored groove 1221. At least one of an other end of the first scored groove 1221 and the other ends of the two second scored grooves 1222 is connected to the explosion-proof scored groove 11. Optionally, the end of the first scored groove 1221 away from the second scored groove 1222 and the end of each second scored groove 1222 away from the first scored groove 1221 may both be in communication with the explosion-proof scored groove 11. A length of the first scored groove 1221 is defined as d, a length of each of the second scored grooves 1222 is defined as $c_2$, and a score length of the Y-shaped scored groove 122 is defined as $L_2$, where $L_2$, $c_2$, and d meet: $L_2=d+2c_2$, 5 mm$\leq c_2 \leq$30 mm, and 5 mm$\leq d \leq$30 mm.

Therefore, by providing the first scored groove 1221 and the second scored grooves 1222 and defining the value ranges of length of the first scored groove 1221 and the second scored grooves 1222, when the internal pressure of the battery 300 increases, the Y-shaped scored groove 122 deforms, and the opening region 10 forms a suitable area S of opening to relieve the pressure. This can also avoid a case where the length of the Y-shaped scored groove 122 is too small, which may lead to a weak structural strength of the Y-shaped scored groove, resulting in unintentional opening. Alternatively, this can avoid a case where the value of at least one of $c_2$ and d is too large and the opening region 10 is blown open when the increased pressure inside the battery 300 does not reach a predetermined pressure, resulting in a decrease in the pressure relief capability of the explosion-proof valve 200.

Optionally, as shown in FIG. 3, an angle between the two second scored grooves 1222 is defined as $\alpha$. $\alpha$ meets: 30°$\leq \alpha \leq$150°. For example, $\alpha$=90°. Therefore, by defining the value range of $\alpha$, the two second scored grooves 1222 can be approximately evenly distributed in the opening region 10, so that the structural strength of the explosion-proof valve 200 can be relatively evenly improved, thereby better preventing unintentional opening of the explosion-proof valve 200.

According to some specific embodiments of the present disclosure, as shown in FIG. 3 and FIG. 4, the explosion-proof valve body 100 includes a connection section 20, a buffer section 30, and a support section 40. The connection section 20 is connected to an outer peripheral side of the support section 40. The support section 40 is spaced apart from the connection section 20 in a thickness direction of the support section 40. The buffer section 30 is connected between the connection section 20 and the support section 40. For example, the connection section 20 and the support section 40 may both be arranged horizontally, and the connection section 20 is spaced apart from the support section 40 in a thickness direction of the explosion-proof valve body 100. One end of the buffer section 30 is connected to an inner peripheral side of the connection section 20, and the other end of the buffer section 30 is connected to the outer peripheral side of the support section 40. The thickness direction of the support section 40 may be consistent with the depth direction of the explosion-proof scored groove 11.

Therefore, with the arrangement of the buffer section 30, the direction of stress transmission in the connection section 20 can be changed, to prevent the stress from being directly transmitted to the support section 40 to lead to a decrease in the structural stability of the opening region 10. For example, the buffer section 30 may be configured to absorb thermal stress generated when the explosion-proof valve 200 is welded to the housing or the cover plate of the battery 300, and prevent the explosion-proof scored groove 11 from being broken by thermal deformation during welding. In addition, the explosion-proof valve 200 can also be prevented from being twisted synchronously with the housing or the cover plate to damage the explosion-proof scored groove 11 and affect the opening pressure of the explosion-proof valve 200.

In some embodiments, referring to FIG. 4, a recess 41 is formed on the support section 40. The recess 41 is formed with an open opening. The open opening is provided on a side facing the connection section 20. The explosion-proof scored groove 11 is formed on a bottom wall of the recess 41, and the explosion-proof scored groove 11 and the open opening are located on the same side in a thickness direction of the bottom wall. A side wall of the explosion-proof scored groove 11 away from a center of the explosion-proof valve body 100 is flush with a side wall of the recess 41 away from the center of the explosion-proof valve body 100. It can be understood that the explosion-proof scored groove 11 is provided at an edge of the bottom wall of the recess 41, the explosion-proof scored groove 11 may extend in a circumferential direction of the recess 41, and a side wall of one side of the explosion-proof scored groove 11 away from the center of the explosion-proof valve body 100 is a side wall of the recess 41.

Therefore, through the formation of the recess 41 on the explosion-proof valve body 100 and the formation of the explosion-proof scored groove 11 on the bottom wall of the recess 41, the thickness of the explosion-proof scored groove 11 and the thickness of the region defined within the explosion-proof scored groove 11 can be reduced, to facilitate the opening of the opening region 10. In addition, the explosion-proof scored groove 11 can be protected to avoid the unintentional opening of the opening region 10 caused by impact on the explosion-proof scored groove 11.

Optionally, the support section 40 may be closer to a center of the battery 300 than the connection section 20 is, so that the explosion-proof valve 200 as a whole is recessed toward an interior of the battery 300, thereby effectively avoiding abnormal opening of the opening region 10 due to impact of an external force on the opening region 10.

Further, the opening region 10 may be provided on the support section 40. The support section 40 can increase the structural strength of the opening region 10 and provide support for the opening region 10.

In some embodiments, the explosion-proof valve body 100 is an aluminum alloy part or a steel part. By such a configuration, the weight of the explosion-proof valve body 100 can be reduced, thereby achieving a lightweight design of the explosion-proof valve body 100. In addition, the aluminum alloy part or the steel part has good structural strength, which can improve the reliability of the explosion-proof valve body 100.

An embodiment of a second aspect of the present disclosure provides a battery 300, including the explosion-proof valve 200 according to the embodiment of the first aspect.

Specifically, the battery 300 further includes a housing (not shown) and a cover plate (not shown). At least one end of the housing is open for mounting the cover plate, a mounting hole (not shown) is formed in the housing or the cover plate, and the explosion-proof valve 200 is connected at the mounting hole. The connection section 20 of the explosion-proof valve 200 may be connected to the housing or the cover plate by welding. When the explosion-proof valve body 100 is fixed to the housing or the cover plate of the battery 300 by welding, the connection section 20 and a part of the housing or the cover plate jointly form a welding seam. In this case, the connection section 20 is an orthographic projection of the welding seam on the explosion-proof valve body 100, and an edge of the explosion-proof valve body 100 may be at one-half a width of the welding seam formed by welding the explosion-proof valve 200 to the battery 300 (e.g., the housing or the cover plate).

According to the battery 300 of the embodiment of the present disclosure, with the use of the explosion-proof valve 200, a reliable connection between the explosion-proof valve 200 and the battery 300 and a good pressure relief capability can both be achieved, and the usage safety of the battery 300 can also be improved.

In some embodiments, an energy density of the battery 300 is defined as E. E meets: 200 wh/kg$\leq$E$\leq$280 wh/kg. For example, E=250 wh/kg. However, the present disclosure is not limited thereto. Therefore, the energy density of the battery 300 is increased, and the overall performance of the battery 300 is improved. Moreover, the greater the energy of the battery 300, the larger the amount of active material or the higher the activity of material is required inside the battery 300. Such a battery 300 requires a more accurate design of the amount of gas discharged through the explosion-proof valve 200, so as to ensure timely opening in extreme cases, and avoid unintentional starting. The explosion-proof valve 200 of the above embodiment of the present disclosure can well meet this requirement.

An embodiment of a third aspect of the present disclosure provides a battery module 400, including the battery 300 according to the embodiment of the second aspect.

Specifically, the battery module 400 may include a plurality of batteries 300 arranged side by side, and the plurality of batteries 300 may be connected in series or in parallel. In the description of the present disclosure, "multiple" and "a plurality of" mean two or more. Therefore, with the use of the battery 300 in the battery module 400, the safety of the battery module 400 can be improved. The battery module 400 may further include two end plates (not shown) and two side plates (not shown). The two end plates are distributed at two ends of each of the plurality of batteries 300 in a first direction. The two side plates are distributed at two sides of each of the plurality of batteries 300 in a second direction. The end plates and the side plates are fixedly connected to fix the batteries 300. The first direction is perpendicular to the second direction. Of course, in other embodiments, the battery module 400 may further include two end plates and a cable tie (not shown), and the two end plates are distributed at two ends of each of the plurality of batteries 300 and fixed by the cable tie.

An embodiment of a fourth aspect of the present disclosure provides a battery pack 500, including the battery 300 according to the embodiment of the second aspect or the battery module 400 according to the embodiment of the third aspect. Therefore, with the use of the battery 300 or the battery module 400 in the battery pack 500, the usage safety of the battery pack 500 can be improved. For example, the battery pack 500 may include a tray, and the battery 300 or the battery module 400 is fixed in the tray. When the battery pack 500 is applied to a vehicle 600, the battery pack 500 is mounted on the vehicle 600 through the tray.

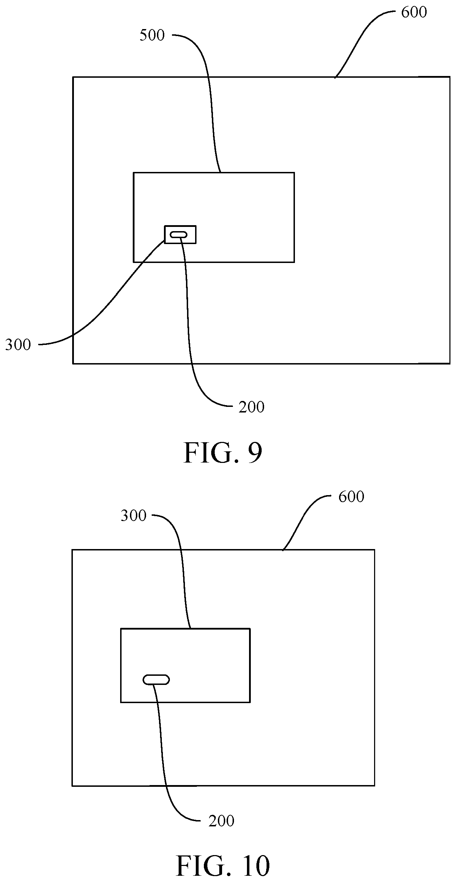

An embodiment of a fifth aspect of the present disclosure provides a vehicle 600, which, as shown in FIG. 8 to FIG. 10, includes the battery 300 according to the embodiment of the second aspect or the battery pack 500 according to the embodiment of the fourth aspect. Therefore, with the use of the battery pack 500 in the vehicle 600, the usage safety of the vehicle 600 can be improved. For example, in some embodiments, the battery 300 may be directly mounted on the vehicle 600. In some other embodiments, the battery 300 is assembled into a battery pack 500, and the battery pack 500 is mounted on the vehicle 600.

In addition, when the battery pack 500 is applied to the vehicle 600, the explosion-proof valve 200 may be arranged to face downward to prevent the discharged high-temperature gas from injuring occupants inside the vehicle 600.

In the description of the present disclosure, it should be understood that orientation or position relationships indicated by the terms such as "center", "longitudinal", "transverse", "length", "width", "thickness", "on", "below", "front", "rear", "left", "right", "vertical", "horizontal", "top", "bottom", "inner", "outer", "axial", "radial", and "circumferential" are based on orientation or position relationships shown in the accompanying drawings, and are used only for ease and brevity of illustration and description, rather than indicating or implying that the mentioned apparatus or component need to have a particular orientation or need to be constructed and operated in a particular orientation. Therefore, such terms should not be construed as limiting of the present disclosure.

In the description of the present disclosure, "first feature" and "second feature" may include one or more features. In the description of the present disclosure, a first feature being "over" or "below" a second feature may mean that the first feature and the second feature are in direct contact, or the first feature and the second feature are not in direct contact but are in contact through another feature therebetween.

In the description of the specification, the description with reference to the terms "an embodiment", "some embodiments", "exemplary embodiments", "example", "specific example", or "some example" and so on means that specific features, structures, materials or characteristics described in connection with the embodiment or example are embraced in at least one embodiment or example of the present disclosure. In this specification, exemplary descriptions of the foregoing terms do not necessarily refer to the same embodiment or example.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. An explosion-proof valve (200), comprising:

   an explosion-proof valve body (100), the explosion-proof valve body (100) having an opening region (10), an explosion-proof scored groove (11) being provided at an edge of the opening region (10), the explosion-proof scored groove (11) comprising a first straight line segment (111), two arc segments (113), and at least one second straight line segment (112), two ends of the first straight line segment (111) being respectively connected to the two arc segments (113), at least one end of the second straight line segment (112) being connected to the arc segment (113), and the first straight line segment (111) being arranged in parallel with the second straight line segment (112);
   in a depth direction of the explosion-proof scored groove (11), a shape of an orthographic projection of the opening region (10) being oblong, an outer edge of the orthographic projection of the opening region (10) being a predetermined opening boundary (101), and an area of the orthographic projection of the opening region (10) being defined as S, S, a, and b respectively meeting: $S = a \times b + \pi \times b^2/4$, $S \geq 80$ mm$^2$, a representing a length of the first straight line segment (111), b representing a distance between an outer side of the first straight line segment (111) and an outer side of the second straight line segment (112), and $b \geq 6$ mm.

2. The explosion-proof valve (200) according to claim 1, wherein b further meets: $b < 30$ mm.

3. The explosion-proof valve (200) according to claim 1 or 2, wherein a and b further meet: $a > b$.

4. The explosion-proof valve (200) according to any one of claims 1-3, wherein a meets: $8$ mm $\leq a \leq 30$ mm.

5. The explosion-proof valve (200) according to any one of claims 1-4, wherein a number of second straight line segments (112) is two, and each of the second straight line segments (112) is connected to a corresponding arc segment (113); and
   in the depth direction of the explosion-proof scored groove (11), two free ends of an outer edge of an orthographic projection of the explosion-proof scored groove (11) are connected to form a connecting line (114), and the connecting line (114) and the outer edge of the orthographic projection of the explosion-proof scored groove (11) jointly constitute the predetermined opening boundary (101).

6. The explosion-proof valve (200) according to claim 5, wherein a length of the connecting line (114) is defined as $c_1$, and a score length of the explosion-proof scored groove (11) is defined as $L_1$, wherein $L_1$ and $c_1$ respectively meet: $L_1=2a-c_1+\pi b$, and $c_1\geq1$ mm.

7. The explosion-proof valve (200) according to claim 6, wherein $c_1$ further meets: $c_1\leq10$ mm.

8. The explosion-proof valve (200) according to any one of claims 1-4, wherein a number of second straight line segments (112) is one, two ends of the second straight line segment (112) are respectively connected to the two arc segments (113), and the first straight line segment (111), the second straight line segment (112), and the two arc segments (113) constitute a closed annular structure; and
an outer edge of an orthographic projection of the explosion-proof scored groove (11) in the depth direction of the explosion-proof scored groove (11) constitutes the predetermined opening boundary (101).

9. The explosion-proof valve (200) according to any one of claims 1-8, further comprising:
a structural scored groove (12), the structural scored groove (12) being provided in the opening region (10), and the structural scored groove (12) being connected to the explosion-proof scored groove (11).

10. The explosion-proof valve (200) according to claim 9, wherein in the depth direction of the explosion-proof scored groove (11), a depth of the structural scored groove (12) is less than a depth of the explosion-proof scored groove (11).

11. The explosion-proof valve (200) according to claim 10, wherein the structural scored groove (12) comprises an X-shaped scored groove (121) or a Y-shaped scored groove (122).

12. The explosion-proof valve (200) according to claim 11, wherein when the structural scored groove (12) comprises the Y-shaped scored groove (122), the Y-shaped scored groove (122) comprises a first scored groove (1221) and two second scored grooves (1222), one end of the first scored groove (1221) is connected to one end of each of the two second scored grooves (1222), other ends of the two second scored grooves (1222) in a direction away from the first scored groove (1221) extend away from each other, and at least one of an other end of the first scored groove (1221) and the other ends of the two second scored grooves (1222) is connected to the explosion-proof scored groove (11); and
a length of the first scored groove (1221) is defined as d, a length of each of the second scored grooves (1222) is defined as $c_2$, and a score length of the Y-shaped scored groove (122) is defined as $L_2$, wherein $L_2$, $c_2$, and d meet: $L_2=d+2c_2$, 5 mm$\leq c_2\leq$30 mm, and 5 mm$\leq d\leq$30 mm.

13. The explosion-proof valve (200) according to claim 12, wherein an angle between the two second scored grooves (1222) is defined as $\alpha$, wherein $\alpha$ meets: $30°\leq\alpha\leq150°$.

14. The explosion-proof valve (200) according to any one of claims 1-13, wherein the explosion-proof valve body (100) comprises a connection section (20), a buffer section (30), and a support section (40), the connection section (20) is connected to an outer peripheral side of the support section (40), the support section (40) is spaced apart from the connection section (20) in a thickness direction of the support section (40), the buffer section (30) is connected between the connection section (20) and the support section (40), and the opening region (10) is provided on the support section (40).

15. The explosion-proof valve (200) according to any one of claims 1-13, wherein a recess (41) is formed on the explosion-proof valve body (100), the explosion-proof scored groove (11) is formed on a bottom wall of the recess (41), and a side wall of the explosion-proof scored groove (11) away from a center of the explosion-proof valve body (100) is flush with a side wall of the recess (41) away from the center of the explosion-proof valve body (100).

16. A battery (300), comprising the explosion-proof valve (200) according to any one of claims 1-15.

17. The battery (300) according to claim 16, wherein an energy density of the battery (300) is defined as E, wherein E meets: 200 wh/kg$\leq E\leq$280 wh/kg.

18. A battery module (400), comprising the battery (300) according to claim 16 or 17.

19. A battery pack (500), comprising the battery (300) according to claim 16 or 17 or the battery module (400) according to claim 18.

20. A vehicle (600), comprising the battery (300) according to claim 16 or 17 or the battery pack (500) according to claim 19.

FIG. 1

FIG. 2

FIG. 3

FIG. 4

FIG. 5

FIG. 6

EP 4 525 169 A1

FIG. 7

FIG. 8

FIG. 9

FIG. 10

## INTERNATIONAL SEARCH REPORT

| | International application No. |
|---|---|
| | **PCT/CN2023/093485** |

### A. CLASSIFICATION OF SUBJECT MATTER

H01M50/342(2021.01)i; H01M50/258(2021.01)i; H01M50/249(2021.01)i

According to International Patent Classification (IPC) or to both national classification and IPC

### B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI: 防爆, 爆破, 破裂, 开启, 刻痕, 面积, 长, 宽, 距离, 间距, 半径, 直径, burst, break, explosion, open, area, length, width, distance, radius, diameter

### C. DOCUMENTS CONSIDERED TO BE RELEVANT

| Category* | Citation of document, with indication, where appropriate, of the relevant passages | Relevant to claim No. |
|---|---|---|
| PX | CN 216980797 U (BYD CO., LTD.) 15 July 2022 (2022-07-15)<br>description, paragraphs [0003]-[0089], and figures 1-4 | 1-20 |
| PX | CN 216980796 U (BYD CO., LTD.) 15 July 2022 (2022-07-15)<br>description, paragraphs [0003]-[0063], and figures 1-3 | 1-20 |
| X | CN 214589030 U (SHENZHEN ZHUO YUAN PRECISION METALS CO., LTD.,<br>DONGGUAN OFFICE) 02 November 2021 (2021-11-02)<br>description, paragraphs [0006]-[0032], and figures 1-3 | 1-20 |
| A | CN 214589031 U (SHENZHEN ZHUO YUAN PRECISION METALS CO., LTD.,<br>DONGGUAN OFFICE) 02 November 2021 (2021-11-02)<br>entire document | 1-20 |
| A | CN 214589032 U (SHENZHEN ZHUO YUAN PRECISION METALS CO., LTD.,<br>DONGGUAN OFFICE) 02 November 2021 (2021-11-02)<br>entire document | 1-20 |
| A | CN 114122613 A (SUZHOU LP NEW ENERGY TECHNOLOGY CO., LTD. et al.) 01<br>March 2022 (2022-03-01)<br>entire document | 1-20 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 August 2023** | **27 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/093485**

| C. | DOCUMENTS CONSIDERED TO BE RELEVANT | |
|---|---|---|
| Category* | Citation of document, with indication, where appropriate, of the relevant passages | Relevant to claim No. |
| A | CN 212461953 U (HUIZHOU BYD BATTERY CO., LTD.) 02 February 2021 (2021-02-02) entire document | 1-20 |
| A | JP 2008235082 A (TOYOTA MOTOR CORP.) 02 October 2008 (2008-10-02) entire document | 1-20 |

Form PCT/ISA/210 (second sheet) (July 2022)

International application No.

**PCT/CN2023/093485**

| Patent document cited in search report | | | Publication date (day/month/year) | Patent family member(s) | | | Publication date (day/month/year) |
|---|---|---|---|---|---|---|---|
| CN | 216980797 | U | 15 July 2022 | None | | | |
| CN | 216980796 | U | 15 July 2022 | None | | | |
| CN | 214589030 | U | 02 November 2021 | None | | | |
| CN | 214589031 | U | 02 November 2021 | None | | | |
| CN | 214589032 | U | 02 November 2021 | None | | | |
| CN | 114122613 | A | 01 March 2022 | CN | 217214995 | U | 16 August 2022 |
| CN | 212461953 | U | 02 February 2021 | None | | | |
| JP | 2008235082 | A | 02 October 2008 | JP | 5380781 | B2 | 08 January 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202221128931